# EUROPÄISCHE PATENTSCHRIFT

(11) **EP 3 128 176 B1**
(45) Veröffentlichungstag und Bekanntmachung des Hinweises auf die Patenterteilung: **27.11.2019**
(21) Anmeldenummer: 16180961.1
(22) Anmeldetag: 25.07.2016
(51) Int. Cl.: F04D 7/04, A01C 23/00

(54) **FÖRDERVORRICHTUNG ZUR FÖRDERUNG VON NICHTHOMOGENEN FLÜSSIGKEITEN**
CONVEYOR DEVICE FOR CONVEYING NON-HOMOGENEOUS LIQUIDS
DISPOSITIF DE TRANSPORT POUR LE CONVOYAGE PAR ASPIRATION DE LIQUIDES NON HOMOGENES

(30) Priorität: 04.08.2015 DE 202015104065 U
(43) Veröffentlichungstag der Anmeldung: 08.02.2017
(73) Patentinhaber: Fliegl sen., Josef, 84556 Kastl (DE)
(72) Erfinder: Fliegl sen., Josef, 84556 Kastl (DE)
(74) Vertreter: Tetzner, Michael

(56) Entgegenhaltungen:
- DE-A1- 19 643 729
- DE-U1-202015 104 065
- US-A1- 2013 039 745

## Beschreibung

Die Erfindung betrifft eine Fördervorrichtung zur Förderung von nichthomogenen Flüssigkeiten, wie Gülle, Jauche, Klärschlamm oder Fäkalien.

Aus der DE 20 2013 100 179 U1 ist eine Befüllvorrichtung bekannt, die zur Befüllung eines Güllewagens eingesetzt wird. Sie weist ein Gehäuse mit einem Ansaugstutzen und einem Abführstutzen sowie ein im Gehäuse angeordnetes und auf einer antreibbaren Welle gehaltertes Saugrad auf, wobei ein mit einer Gegenschneide zusammenwirkendes Schneidmessers im Bereich des Ansaugstutzens vorgesehen ist. Auf diese Weise können etwaige, zu grobe Feststoffe zerkleinert werden um dadurch Schäden an nachfolgenden Kompressoren oder Pumpen zu vermeiden. Allerdings können nicht zerkleinerbare Feststoffe immer wieder zu Verstopfungen führen und erforderten dann ein Abkoppeln des an der Fördervorrichtung angeschlossenen Saugschlaues.

Die DE 196 43 729 A1 offenbart eine Pumpe mit einem Gehäuse, das eine Vorkammer mit einer Ansaugöffnung und eine Hauptkammer mit einer Abführöffnung aufweist. Weiterhin ist eine in der Hauptkammer angeordnete und auf einer antreibbaren Welle gehalterte Rotationspumpe vorgesehen. Zwischen Vorkammer und Hauptkammer ist ferner eine Zerkleinerungseinrichtung angeordnet, die mit einem Auffangkasten zusammenwirkt. Die Zerkleinerungseinrichtung besteht aus einem mit einer Schneidplatte zusammenwirkenden, rotierenden Schneidelement, wobei die Schneidplatte Durchlassöffnungen aufweist, die eine Verbindung zwischen der Vorkammer und der Hauptkammer darstellen.

Der Erfindung liegt daher die Aufgabe zugrunde, die Handhabung der Fördervorrichtung zu verbessern.

Erfindungsgemäß wird diese Aufgabe durch die Merkmale des Anspruches 1 gelöst.

Vorteilhafte Ausgestaltungen der Erfindung sind Gegenstand der weiteren Ansprüche.

Die erfindungsgemäße Fördervorrichtung zur Förderung von nichthomogenen Flüssigkeiten, wie Gülle, Jauche, Klärschlamm oder Fäkalien besteht im Wesentlichen aus
- einem Gehäuse, das eine Vorkammer mit einer Ansaugöffnung und eine Hauptkammer mit einer Abführöffnung aufweist,
- einem in der Hauptkammer angeordneten und auf einer antreibbaren Welle gehalterten Saugrad und
- einer zwischen Vorkammer und Hauptkammer vorgesehenen Zerkleinerungseinrichtung und
- einem Auffangkasten für nicht zerkleinerbare Fremdkörper, der einen Entleerungsöffnung aufweist und in der Vorkammer vorgesehen ist.

Durch das Vorsehen eines Auffangskastens im Bereich der Vorkammer können nicht zerkleinerbare Fremdkörper zunächst bis zu einer gewissen Menge gesammelt werden, um dann bequem über eine Entleerungsöffnung aus der Fördervorrichtung ausgeschleust zu werden. Ein mühsames An- und Abkuppeln des Saugschlaues an der Ansaugöffnung der Vorkammer wird dadurch entbehrlich.

Die Zerkleinerungseinrichtung besteht weiterhin aus wenigstens einem mit einer Schneidplatte zusammenwirkenden, rotierenden Schneidelement, wobei die Schneidplatte eine Vielzahl von Öffnungen aufweist, die eine Verbindung zwischen der Vorkammer und der Hauptkammer darstellen. Eine besonders effiziente Schneidwirkung hat sich dadurch ergeben, dass die Öffnungen der Schneidplatte schneckenförmig um eine Drehachse des wenigstens einen rotierenden Schneidelements angeordnet sind. Die Schneidplatte ist vorzugsweise aus einem Verschleißblech aus Stahl gefertigt und es ist weiterhin vorteilhaft, wenn das wenigstens eine Schneidelement drehfest mit der antreibbaren Welle des Saugrades verbunden ist, sodass kein zusätzlicher Antrieb für das Schneidelement erforderlich ist.

Der Auffangkasten ist zweckmäßigerweise unterhalb der Zerkleinerungseinrichtung angeordnet, sodass etwaige nicht zerkleinerbare Fremdkörper der Schwerkraft folgend in den Auffangkasten gelangen und das Druchströmen der Öffnungen der Schneidplatte nicht weiter behindern. Die das Saugrad halternde Welle ist mit einem Antriebmotor zum Antreiben der Welle gekoppelt, der vorzugsweise außerhalb des Gehäuses angeordnet ist und beispielsweise durch einen Elektromotor oder einen Verbrennungsmotor gebildet wird.

Weitere Einzelheiten der Erfindung werden im Folgenden anhand der nachfolgenden Beschreibung und der Zeichnung näher erläutert.

In der Zeichnung zeigen
- Fig. 1: eine dreidimensionale, geschnittene Darstellung der Fördereinrichtung,
- Fig. 2: eine Schnittdarstellung der Fördereinrichtung sowie
- Fig. 3: eine Draufsicht der Zerkleinerungseinrichtung.

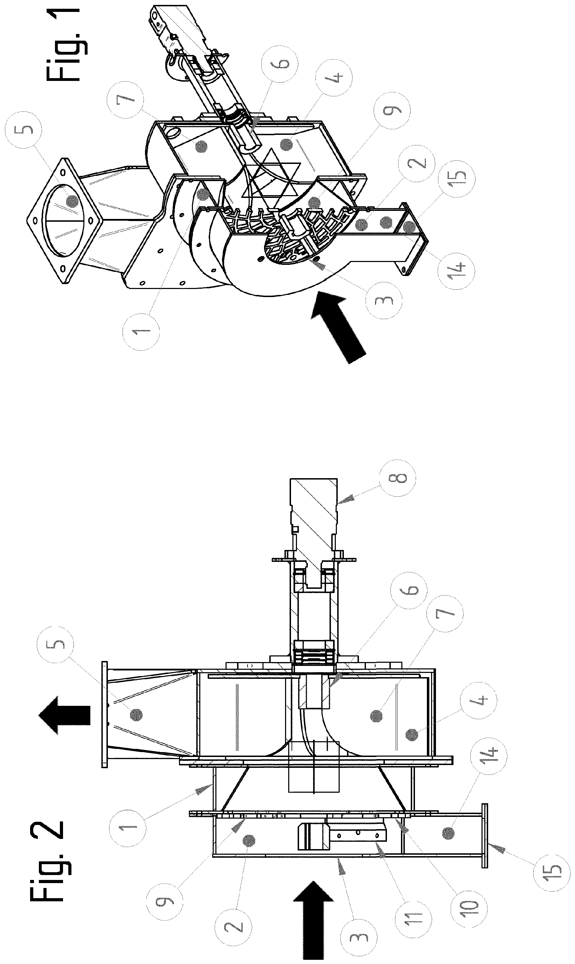

Die in den Figuren 1 und 2 dargestellte Fördervorrichtung zur Förderung von nichthomogenen Flüssigkeiten, wie Gülle, Jauche, Klärschlamm oder Fäkalien sieht ein Gehäuse 1 vor, das eine Vorkammer 2 mit einer Ansaugöffnung 3 und eine Hauptkammer 4 mit einer Abführöffnung 5 aufweist. In der Hauptkammer 4 ist auf einer antreibbaren Welle 6 ein Saugrad 7 gehaltert. Der Antrieb der Welle 6 erfolgt über einen außerhalb des Gehäuses 1 angeordneten Antrieb 8.

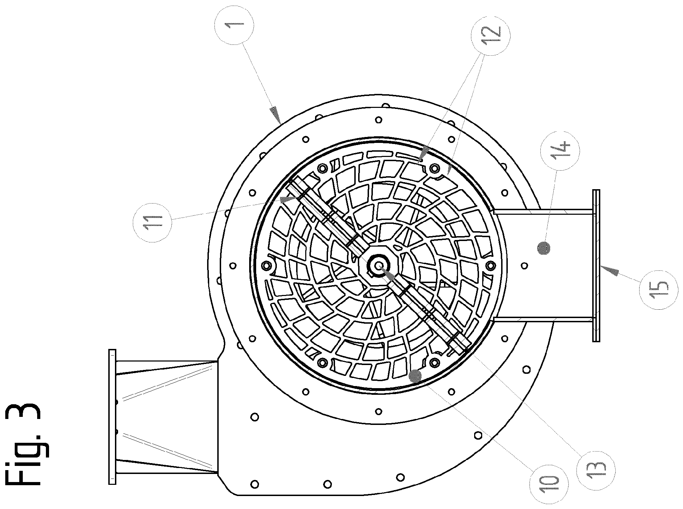

Weiterhin ist zwischen der Vorkammer 2 und der Hauptkammer 4 eine Zerkleinerungseinrichtung 9 vorgesehen, die wenigstens ein mit einer Schneidplatte 10 zusammenwirkendes, rotierendes Schneidelement 11 aufweist. Die Schneidplatte 10 wird vorzugsweise aus einem Verschleißblech aus Stahl gefertigt und ist in Fig. 3 in der Draufsicht dargestellt und weist eine Vielzahl von Öffnungen 12 auf, die eine Verbindung zwischen der Vorkammer 2 und der Hauptkammer 4 darstellen, die Öffnungen 12 der Schneidplatte 10 sind dabei schneckenförmig um eine Drehachse 13 des wenigstens einen rotierenden Schneidelementes 11 angeordnet. Das wenigstens eine Schneidelement 11 ist dabei zweckmäßigerweise drehfest mit der antreibbaren Welle 6 des Saugrades 7 verbunden, sodass die Drehachse 13 auch der Drehachse der Welle 6 entspricht.

Die Vorkammer weist weiterhin einen Auffangkasten 14 für nicht zerkleinerbare Fremdkörper mit einer Entleerungsöffnung 15 auf. Der Auffangkasten 14 ist unterhalb der Zerkleinerungseinrichtung 9 angeordnet, sodass etwaige nicht zerkleinerbare Fremdkörper der Schwerkraft folgend in den Auffangkasten 14 gelangen und von dort zu gegebener Zeit über die Entleerungsöffnung 15 ausgeschleust werden können.

## Patentansprüche

1. Fördervorrichtung zur Förderung von nichthomogenen Flüssigkeiten, wie Gülle, Jauche, Klärschlamm oder Fäkalien, mit
- einem Gehäuse (1), das eine Vorkammer (2) mit einer Ansaugöffnung (3) und eine Hauptkammer (4) mit einer Abführöffnung (5) aufweist,
- einem in der Hauptkammer (4) angeordneten und auf einer antreibbaren Welle (6) gehalterten Saugrad (7),
- einer zwischen Vorkammer (2) und Hauptkammer (4) vorgesehenen Zerkleinerungseinrichtung (9), die wenigstens ein mit einer Schneidplatte zusammenwirkendes, rotierendes Schneidelement (11) aufweist, wobei die Schneidplatte (10) mit einer Vielzahl von Öffnungen (12) versehen ist, die eine Verbindung zwischen der Vorkammer (2) und der Hauptkammer (4) darstellen und
- einem in der Vorkammer (2) angeordneten Auffangkasten (14) für nicht zerkleinerbare Fremdkörper mit einer Entleerungsöffnung (15),
**dadurch gekennzeichnet, dass** die Öffnungen (12) der Schneidplatte (10) schneckenförmig um eine Drehachse (13) des wenigstens einen rotierenden Schneidelements (11) angeordnet sind.

2. Fördervorrichtung nach Anspruch 1, **dadurch gekennzeichnet, dass** die Schneidplatte (10) aus einem Verschleißblech aus Stahl gefertigt ist.

3. Fördervorrichtung nach Anspruch 1, **dadurch gekennzeichnet, dass** das wenigstens eine Schneidelement (11) drehfest mit der antreibbaren Welle (6) des Saugrades (7) verbunden ist.

4. Fördervorrichtung nach einem oder mehreren der vorhergehenden Ansprüche, **dadurch gekennzeichnet, dass** der Auffangkasten (14) unterhalb der Zerkleinerungseinrichtung (9) angeordnet ist, sodass etwaige nicht zerkleinerbare Fremdkörper der Schwerkraft folgend in den Auffangkasten (14) gelangen.

5. Fördervorrichtung nach einem oder mehreren der vorhergehenden Ansprüche, **dadurch gekennzeichnet, dass** die das Saugrad (7) halternde Welle (6) mit einem Antrieb (8) zum Antreiben der Welle (6) gekoppelt ist.

6. Fördervorrichtung nach Anspruch 5, **dadurch gekennzeichnet, dass** der mit der Welle (6) gekoppelte Antrieb (8) außerhalb des Gehäuses angeordnet ist.

## Claims

1. A conveyor device for conveying non-homogeneous liquids, such as liquid manure, swill, sewage sludge or fecal matter, comprising
- a housing (1) having an antechamber (2) with an intake opening (3) and a main chamber (4) with a discharge opening (5),
- a suction wheel (7) mounted on a driven shaft (6) in the main chamber (4),
- a size-reducing device (9), having at least one rotating cutting element (11) that is provided between the antechamber (2) and the main chamber (4) and works together with a cutting plate,
wherein the cutting plate (10) is provided with a plurality of openings (12), which form a connection between the antechamber (2) and the main chamber (4), and
- a collecting box (14) having a discharge opening (15) is provided in the antechamber (2) for foreign bodies that cannot be pulverized,
**characterized in that** the openings (12) in the cutting plate (10) are arranged in a helical pattern around the axis of rotation (13) of the at least one rotating cutting element (11).

2. The conveyor device according to claim 1, **characterized in that** the cutting plate (10) is a wear plate made of steel.

3. The conveyor device according to claim 1, **characterized in that** the at least one cutting element (11) is connected in a rotationally fixed manner to the driven shaft (6) of the suction wheel (7).

4. The conveyor device according to any one or more of the preceding claims, **characterized in that** the collecting box (14) is situated beneath the size-reducing device (9), so that any foreign bodies that cannot be reduced in size will enter the collecting box (14) by gravity.

5. The conveyor device according to any one or more of the preceding claims, **characterized in that** the shaft (6) holding the suction wheel (7) is coupled to a drive (8) for driving the shaft (6),

6. The conveyor device according to claim 5, **characterized in that** the drive (8) connected to the shaft (6) is located outside of the housing.

## Revendications

1. Dispositif de transport pour le convoyage de liquides non homogènes, comme lisier, purin, boue de curage et matières fécales, avec
- un boitier (1) qui est doté d'une préchambre (2) avec une ouverture d'aspiration (3) et d'une chambre principale (4) avec une ouverture d'évacuation (5),
- une roue d'aspiration (7) disposée dans la chambre principale (4) et maintenue sur un arbre (6) pouvant être entraîné,
- un dispositif de fragmentation (9), qui, prévue entre la préchambre (2) et la chambre principale (4), est doté d'au moins un élément de coupe (11) rotatif, qui est en action conjointe avec une plaque de coupe, sachant que la plaque de coupe (10) est pourvue d'un grand nombre d'ouvertures (12) qui représentent une liaison entre la préchambre (2) et la chambre principale (4), et
- une boite de captage (14) de corps étrangers non fragmentés, qui, disposée dans la préchambre (2), est dotée d'une ouverture de vidange (15),
**caractérisé en ce que**,
les ouvertures (12) de la plaque de coupe (10) sont disposées en spirale autour d'un axe de rotation (13) de l'au moins un élément de coupe (11) rotatif.

2. Dispositif de transport selon la revendication 1, **caractérisé en ce que** la plaque de coupe (10) est fabriquée en tôle d'usure d'acier.

3. Dispositif de transport selon la revendication 1, **caractérisé en ce que** l'au moins un élément de coupe (11) est relié solidaire en rotation à l'arbre (6) de la roue d'aspiration (7) pouvant être entraîné.

4. Dispositif de transport selon l'une ou plusieurs des revendications précédentes, **caractérisé en ce que** la boite de captage (14) est disposée au-dessous du dispositif de fragmentation (9) de manière à ce que des corps étrangers non fragmentés parviennent dans la boite de captage (14) sous l'effet de la pesanteur.

5. Dispositif de transport selon l'une ou plusieurs des revendications précédentes, **caractérisé en ce que** l'arbre (6), qui maintient la roue d'aspiration (7), est couplé avec un arbre (8) destiné à entraîner l'arbre (6).

6. Dispositif de transport selon la revendication 5, **caractérisé en ce que l**'arbre (8), couplé avec l'arbre (6), est disposé en dehors du boitier.
